**Europäisches Patentamt**

**European Patent Office**

**Office européen des brevets**

(19)

(11) Veröffentlichungsnummer: **0 377 151**
**A1**

(12) **EUROPÄISCHE PATENTANMELDUNG**

(21) Anmeldenummer: **89123123.5**

(22) Anmeldetag: **14.12.89**

(51) Int. Cl.5: **H01M 8/04, H01M 8/12, G05D 29/00**

Die Anmeldung wird, wie ursprünglich eingereicht, unvollständig veröffentlicht (Art. 93 (2) EPÜ). Die Stelle der Beschreibung oder der Patentansprüche, die offensichtlich eine Auslassung enthält, ist als Lücke an der entsprechenden Stelle ersichtlich.

Ein Antrag gemäss Regel 88 EPÜ auf Hinzufügung einer fehlenden Seite liegt vor. Über diesen Antrag wird im Laufe des Verfahrens von der Prüfungsabteilung eine Entscheidung getroffen werden (Richtlinien für die Prüfung im EPA, A-V, 2.2).

(30) Priorität: **04.01.89 CH 18/89**

(43) Veröffentlichungstag der Anmeldung:
**11.07.90 Patentblatt 90/28**

(84) Benannte Vertragsstaaten:
**CH DE FR GB IT LI NL SE**

(71) Anmelder: **ASEA BROWN BOVERI AG**
**Haselstrasse**
**CH-5401 Baden(CH)**

(72) Erfinder: **Bossel, Ulf, Dr.**
**Baldeggstrasse 13**
**CH-5400 Baden(CH)**

(54) **Verfahren zur selbsttätigen Temperatur- und Leistungsregulierung einer oder mehrerer, mit Kohlenwasserstoffen betriebenen Hochtemperatur-Brennstoffzellen.**

(57) Verfahren zur selbsttätigen Temperatur- und Leistungsregulierung einer Hochtemperatur-Brennstoffzelle (14) durch Zuführung des den Restsauerstoff und das Ballastgas enthaltenen, an der Sauerstoffseite der Brennstoffzelle (14) abgeführten Gases (8) teils zu einem Brenner (10) für Vorverbrennung, teils zu einem Brenner (11) für Nachverbrennung. Die Vorverbrennungszone liegt vor, die Nachverbrennungszone nach der Brennstoffzelle (14). Letztere wird durch Vorverbrennung (10) so lange aufgeheizt, bis das abgeführte Gas (8) keinen Sauerstoff mehr enthält und die Vorverbrennung nicht mehr unterhalten wird: Gleichgewicht! Jede Abweichung vom Nenn-Betriebspunkt verschiebt den Betriebszusand wieder ins Gleichgewicht, so dass die Brennstoffzelle (14) selbstregelnd, thermisch und elektrisch eigenstabil und inhärent sicher ist.

# Verfahren zur selbsttätigen Temperature- und Leistungsregulierung einer oder mehrerer, mit Kohlenwasserstoffen betriebenen Hochtemperatur-Brennstoffzellen

## Technisches Gebiet

Hochtemperatur-Brennstoffzellen zur Umwandlung von chemischer Energie in elektrische Energie. Die elektrochemische Energieumwandlung gewinnt dank ihres guten Wirkungsgrades gegenüber anderen Umwandlungsarten an Bedeutung.

Die Erfindung bezieht sich auf die Weiterentwicklung der elektrochemischen Hochtemperatur-Prozesse unter Verwendung von keramischen Feststoffelektrolyten als Ionenleiter, wobei das Verfahren weitgehend unabhängig vom Brennstoff angewendet werden soll.

Die vorliegende Erfindung betrifft ein Verfahren zu selbsttätigen Temperatur- und Leistungsregulierung einer oder mehrerer, mit Kohlenwasserstoffen betriebenen Hochtemperatur-Brennstoffzellen mit einem Feststoffelektrolyten auf der Basis von Zirkonoxyd.

## Stand der Technik

Die elektrochemische Umwandlung von chemischer in elektrische Energie mittels Brennstoffzellen ist allgemein bekannt. Auch wird der Einsatz von festen keramischen Elektrolyten auf der Basis von Zirkonoxyd seit 1937 experimentell untersucht. Eine gute Uebersicht über die Entwicklung der Technik wird von F.J. Rohr (SOLID ELECTROLYTES, 1978, Seite 431) gegeben. Seither hat sich prinzipiell wenig verändert. Die keramischen Werkstoffe wurden verbessert. Die Feststoffelektrolyt-Brennstoffzellen werden im Hinblick auf eine kostengünstige Fertigung optimiert (Vergl. W.J. Dollard und W.G. Parker, An overview of the Westinghouse Electric Corporation solid oxide fuel cell program, Extended Abstracts, Fuel Cell Technology and Applications, International Seminar, Den Haag, Niederlande, 26. bis 29. Oktober, 1987).

Alle bekannten verwirklichten Brenstoffzellen mit keramischem Festelektrolyt werden durch eine künstliche Beheizung auf Betriebstemperatur gebracht. Hierzu dient entweder eine direkte oder indirekte elektrische Aufheizung oder eine Beheizung mit heissen Verbrennungsgasen. In allen Fällen wird die Beheizung automatisch oder von Hand abgeschaltet, wenn die Brennstoffzelle die gewünschte Betriebstemperatur erreicht hat und sich dann mit anfallenden Abwärme selbsttätig auf dieser halten kann.

Diese bekannten Verfahren erfordern einen beträchtlichen regeltechnischen Aufwand. Es müssen Temperaturfühler in den Brennstoffzellen installiert werden, die den Impuls zur bedarfsgerechten Beheizung geben. Ferner muss die Heizung immer dann wieder angestellt werden, wenn die Temperatur in den Zellen absinkt.

Die bekannte Betriebsweise von Hochtemperatur-Brennstoffzellen befriedigt nicht. Es existiert daher ein grosses Bedürfnis, eine den grosstechnischen Betriebsbedingungen gerechter werdende Arbeitsweise zu entwickeln und zu verbessern.

## Darstellung der Erfindung

Der Erfindung liegt die Aufgabe zugrunde, ein Verfahren zur selbsttätigen Temperatur- und Leistungsregulierung von Hochtemperatur-Brennstoffzellen mit Feststoffelektrolyt auf $ZrO_2$-Basis anzugeben, welches den Einsatz von komplizierten Regelkreisen und ihren aufwendigen Mechanismen weitgehend überflüssig macht und sich mit einfachen Mitteln verwirklichen lässt. Das Verfahren soll die für die Temperaturregulierung notwendige Wärme unmittelbar in situ an den Brennstoffzellen zur Verfügung stellen, so dass sie nicht noch zusätzlich von aussen zugeführt werden muss.

Diese Aufgabe wird dadurch gelöst, dass im eingangs erwähnten Verfahren die Brennstoffzellen 14 auf der einen Seite mit gasförmigem 4 oder flüssigem 5, nachträglich verdampften Brennstoff und auf der anderen Seite mit einem gasförmigen Sauerstoffträger 1 beaufschlagt werden, und dass das den Restsauerstoff und gegebenenfalls ein Ballastgas enthaltende, Gas von der Sauerstoffseite der Brennstoffzellen 14 abströmende Gas 8 in zwei Ströme geteilt wird, wobei der erste Strom zur Vorverbrennung einem, in Strömungsrichtung des Brennstoffs gesehen, vor den Brennstoffzellen 14 angeordneten Brenner 10, der zweite Strom zur Nachverbrennung einem, in Strömungsrichtung des Abgases gesehen, nach den Brennstoffzellen 14 angeordneten Brenner 11 zugeführt wird, wobei die Vorwie die Nachverbrennung durch künstliche Mittel eingeleitet und aufrechterhalten wird, und dass der erste Strom so bemessen wird, dass seine Sauerstoffmenge zur vollständigen Verbrennung des Brennstoffs nicht ausreicht, während der zweite Strom so bemessen wird, dass stets ein über die vollständige Verbrennung des Restbrennstoffs hinausgehender Sauerstoffüberschuss vorhanden ist.

## Weg zur Ausführung der Erfindung

Die Erfindung wird anhand der nachfolgenden, durch eine Figur näher erläuterten Ausführungsbeispiele beschrieben.

Dabei zeigt:

Die Fig. einen grundsätzlichen schematischen Aufbau einer Vorrichtung mit Fliessdiagramm zur Durchführung des Verfahrens.

Die Fig. stellt den Verfahrensablauf anhand einer stark schematisierten Anlage dar. 1 ist die Zufuhr des gasförmigen Sauerstoffträgers, im vorliegenden Fall Luft ($O_2 + 4N_2$). 2 ist ein Vorwärmer für den Sauerstoffkörper, der vom Abgas beheizt wird. 3 stellt ein doppelwandiges wärmeisoliertes Gefäss (Doppelmantel-Behälter) dar. 4 ist die Zufuhr des gasförmigen Brennstoffs, im vorliegenden Fall Methan ($CH_4$), 5 diejenige des flüssigen Brennstoffs (Kohlenwasserstoff $C_nH_m$). Letztere wird im durch Abgas beheizten Verdampfer 6 in gasförmigem Zustand übergeführt. 7 ist der Vorwärmer für gasförmigen und dampfförmigen Brennstoff. 8 stellt die Abfuhr des Restsauerstoffs und (gegebenenfalls) des Ballastgases (hier Stickstoff) nach den Brennstoffzellen 14 dar. 9 ist die entsprechende Abfuhr des Restbrennstoffs und der gasförmigen Reaktionsprodukte, im vorliegenden Fall Kohlendioxyd und Wasserdampf. 10 ist ein Brenner für die Vorverbrennung, der der Aufheizung der Brennstoffzellen 14 dient. Am Ausgang der letzteren befindet sich ein Brenner 11 für die Nachverbrennung, wo die letzte Ausnutzung des noch nicht umgesetzten Restbrennstoffs durchgeführt wird. 12 ist die Abfuhr des Abgases, nach den Brennstoffzellen 14, welches im vorliegenden Fall aus einer Mischung von $N_2$; $H_2O$ und $CO_2$ besteht. 13 stellt den Austritt des Abgases beim endgültigen Verlassen der Anlage dar. 14 sind keramische Brennstoffzellen, welche auf einer Seite mit dem gasförmigen Sauerstoffträger, auf der anderen Seite mit dem ebenfalls gasförmigen Brennstoff beaufschlagt werden.

Leistung) verarmt der auf der Sauerstoffseite die Brennstoff verlassende Gasstrom zusehends an Sauerstoff. Demzufolge wird die Vorverbrennung immer schwächer und erlischt ganz, sobald die Nennleistung erreicht ist. Das gleiche spielt sich nach den Brennstoffzellen ab: die Nachverbrennung wird schwächer und erlischt im Nennpunkt vollständig, weil nun die hierfür notwendigen Reaktanden fehlen.

Sinkt die Temperatur im Feststoffelektrolyten der Brennstoffzellen aus irgend einem Grund ab, so nimmt auch die Wanderung der Sauerstoffionen ab und es steht automatisch wieder Sauerstoff in der Vorverbrennungszone zur Verfügung. Die Vorverbrennung setzt selbsttätig ein und bewirkt einen Temperaturanstieg im Feststoffelektrolyten bis die Nennleistung erreicht wird.

Das System pendelt also von selbst um das Gleichgewicht im Nennpunkt. Es liegt ein selbsttätig wirkender geschlossener Regelkreis über die Betriebsmittel selbst vor, der keinerlei zusätzliche Steuer- oder Regelorgane mit ihren Rückführungen etc. benötigt. Eine derartige Brennstoffzelle ist selbstregelnd, thermisch und elektrisch eigenstabil und inhärent sicher. Die Temperatur-und Leistungsregulierung einer Hochtemperatur-Brennstoffzelle lässt sich kaum einfacher gestalten. Der Nennbetriebspunkt lässt sich auf einfache Weise durch Dosierung der Menge und der Vorwärmung der gasförmigen Reaktanden einstellen.

Zur Gewährleistung eine guten Gaszündung und der Aufrechterhaltung der Vorverbrennung unter den oben beschriebenen Betriebszuständen werden die entsprechenden Brenner mit Zündvorrichtungen (Zündkerzen etc.) ausgerüstet.

Ausführungsbeispiel:

Siehe Figur!

Einem gemäss Fig. aufgebauten Stapel von Brennstoffzellen 14 wurden 1,68 l/s Luft 1 und 0,084 l/s Methan 4, jeweils bezogen auf Normalbedingungen, bei Raumtemperatur zugeführt. Unter diesen Bedingungen stellte sich eingangs eine Temperatur von ca. 20 °C in den Brennstoffzellen 14 ein, die für deren Betrieb bei weitem nicht ausreichte.

Aufgrund der gewählten Aufteilung der Abfuhr 8 des den elektrochemisch aktiven Bereich der Brennstoffzellen 14 verlassenden Stroms gasförmiger Medien in zwei Teilströme, von denen einer dem Brenner 10 der Vor-, der andere dem Brenner 11 der Nachverbrennung zugeführt wurde und dank der in diesen Zonen angeordneten, permanent vorhandenen Mittel zur Aufrechterhaltung der Verbrennung (Zündkerzen), wurde letztere in diesen Zonen durchgeführt.

Entsprechend der gewählten festen Einstellung der beiden Teilströme (20% zu Vorverbrennung, 80% zur Nachverbrennung) erfolgt die Vorverbrennung absichtlich unvollständig. Im Bereich der Nachverbrennung stand jedoch ausreichend Sauerstoff zur Verfügung, so dass ein voll ständiger Ausbrand des zugeführten Gases (Abfuhr 9) bewerkstelligt wurde.

Durch die Vorverbrennung im Brenner 10 stieg die Temperatur anfangs auf 720 °C, später dank Vorwärmung des zugeführten Methans noch weiter solange die Vorverbrennung in bedeutendem Mass anhielt. Hinter den Brennstoffzellen 14, also vor dem Brenner 11 der Nachverbrennung, war die Temperatur des teilweise verbrannten Methans infolge Wärmeabgabe an die Brennstoffzellen 14 anfangs etwa 240 °C.

Durch die permanent betriebene Zündkerze des Brenners 11 wurde dieses Gas (Abfuhr 9) dann mit dem zweiten Teilstrom (Abfuhr 8) verbrannt, wobei die verfügbare Sauerstoffmenge stets grösser war als die benötigte, so dass der Restbrennstoff vollstaändig verbrannt wurde. Hinter dieser Nachverbrennung betrug die temperatur des Abgases etwa 980 °C.

Mit dieser Temperatur gelangte das Abgas (Abfuhr 12) in den Luftvorwärmer 2. Der zugeführte Luftstrom 1 wurde sehr rasch auf höhere Temperaturen gebracht und den Brennstoffzellen 14 vorgewärmt zugeführt. Der Methanstrom (Zufuhr 4) wurde im Vorwärmer 7 für Brennstoff erhitzt und dem Brenner 10 zugeführt, was eine Erhöhung des Temperaturniveaus im gesamten Brennstoffstrom bewirkte.

Bereits nach etwa zwei Minuten, vom Anstellen der Anlage gerechnet, hatten beide die Brennstoffzellen 14 beauf schlagenden Gasströme (zugeführter Luftstrom 1 und teilweise verbranntes Methan nach Brenner 10) Temperaturen um 900 °C erreicht. Bei diesen Gastemperaturen konnten die keramischen Brennstoffzellen 14 in etwa 120 Minuten auf etwa 800 °C aufgeheizt werden.

Bereits vor Erreichen dieser Temperatur setzte die konvertierende chemische Umsetzung des Methans in Wasserstoff und Kohlenmonoxyd ein. Die dafür benötigte Wärme wurde von der Vorverbrennung geliefert. Die für die Reaktionen notwendigen Stoffe Wasserdampf und Kohlendioxyd waren in ausreichendem Umfang in der Vorverbrennung erzeugt worden.

Nachdem die Brennstoffzellen 14 eine Temperatur von etwa 800 °C erreicht hatten, setzte die elektrochemische Umsetzung der Reaktionsprodukte der Konvertierung des Methans mit dem Sauerstoff der zugeführten Luft ein, was der Ausschlag der extern installierten Strom- und Spannungsmesser zeigte. Wegen der direkten Umsetzung des Luftsauerstoffs wurde der Sauerstoffgehalt des abströmenden Mediums (Abfuhr 9) zunehmend geringer. Dadurch verminderte sich die Umsetzung in der Vorverbrennungszone. Dadurch wurde mehr Gas im unverbrannten Zustand der elektrochemischen Reaktion zugeführt.

Mit zunehmender Wirksamkeit der elektrochemischen Umsetzung wurde aber auch der Brennstoffgehalt des die Brennstoffzellen 14 verlassenden Gasstromes (Abfuhr 9) zunehmend geringer. Die direkte chemische Umsetzung in der Nachverbrennungszone wurde wegen des reduzierten Brennstoff- und Sauerstoffgehalts der beiden Gasströme so stark gedrosselt, dass die resultierende Temperaturerhöhung des Abgasstroms Werte um 150 °C annahm. Der wesentliche Beitrag zur Erwärmung des Abgasstroms stammte unter diesen normalen Betriebsbedingungen von den mit der elektrochemischen Umsetzung verbundenen Wärmeverlusten.

Nach einer Einschwingzeit von etwa 30 Minuten stabilisierte sich die Betriebstemperatur der Brennstoffzellen 14 auf etwa 880 °C bei einer elektrischen Nennleistung von 1,56 kW. Diese Temperatur und die elektrische Leistung konnten durch Erhöhung des Gasumsatzes gesteigert, durch Drosselung des Gasumsatzes in Grenzen reduziert werden. Zur Aufrechterhaltung einer Brennstoffzellentemperatur von 800 °C war eine minimale Gasmenge von 0,012 l/s Methan erforderlich. Bei einer Betriebstemperatur von 980 °C konnte eine elektrische Leistung von 2,18 kW bei einem Gasumsatz von 0,128 l/s entnommen werden.

Bei fest eingestelltem Gasumsatz erwies sich das System als regelungstechnisch eigenstabil. Durch willkürliche kurze Unterbrechungen der Gaszufuhr wurde das eingestellte Gleichgewicht absichtlich gestört, was sich durch ein Fallen der Brennstoffzellentemperatur bemerkbar machte. Nachdem die Gaszufuhr wieder freigegeben worden war, erfolgten zuerst chemische Reaktionen in den Vor-und Nachverbrennungszonen, die zu einer Erhöhung der Temperatur in den Brennstoffzellen 14 führten. Nachdem die Betriebstemperatur erreicht worden war, stellten sich die ursprünglichen konstanten Werte wieder ein.

Die Erfindung ist nicht auf das Ausführungsbeispiel beschränkt. Das Verfahren zur selbsttätigen Temperatur-und Leistungsregulierung einer oder mehrerer, mit Kohlenwasserstoffen betriebenen Hochtemperatur-Brennstoffzellen 14 mit einem Feststoffelektrolyten auf der Basis von Zirkonoxyd wird durchgeführt, indem die Brennstoffzellen 14 auf der einen Seite mit gasförmigem 4 oder flüssigem 5, nachträglich verdampftem Brennstoff und auf der anderen Seite mit einem gasförmigen Sauerstoffträger 1 beaufschlagt werden und das den Restsauerstoff und gegebenenfalls ein Ballastgas enthaltende, von der Sauerstoffseite der Brennstoffzellen 14 abströmende Gas 8 in zwei Ströme geteilt wird, wobei der erste Strom zur Vorverbrennung einem, in Strömungsrichtung des Brennstoffs gesehen, vor den Brennstoffzellen 14 angeordneten Brenner 10, der zweite Strom zur Nachverbrennung einem, in Strömungsrichtung des Abgases gesehen, nach den Brennstoffzellen 14 angeordneten Brenner 11 zugeführt wird, wobei die Vor- wie die Nachverbrennung durch künstliche Mittel eingeleitet und aufrechterhalten wird und der erste Strom so bemessen wird, dass seine Sauerstoffmenge zur vollständigen Verbrennung des Brennstoffs nicht ausreicht, während der zweite Strom so bemessen wird, dass stets ein über die vollständige Verbrennung des Restbrennstoffs hinausgehender Sauerstoffüberschuss vorhanden ist.

In einfacher Weise wird das Mengenverhältnis der den Restsauerstoff enthaltenden, zur Vorverbrennung und zur Nachverbrennung dienenden Ströme des Gases 8 fest eingestellt. Dieses Mengenverhältnis wird in einer abweichenden Verfahrensvariante über entsprechende Regeleinrichtungen den Betriebsbedingungen angepasst.

Die Erfindung bietet gegenüber der herkömmlichen Technik wesentliche Vorteile. Da der Luftsauerstoff erst nach Erreichen der Betriebstemperatur elektrochemisch umgesetzt werden kann, enthält die Abluft hinter den Brennstoffzellen immer dann noch Sauerstoff, wenn die Betriebstemperatur noch nicht erreicht ist. Durch die erfindungsgemässe Führung der Abluft in den Bereich des Gaseintritts vor dem Stapel kann der Brennstoff so lange unter Wärmeentwicklung direkt verbrannt werden, solange noch Sauerstoff in der Abluft verfügbar ist. Die Brennstoffzellen werden also aufgeheizt.

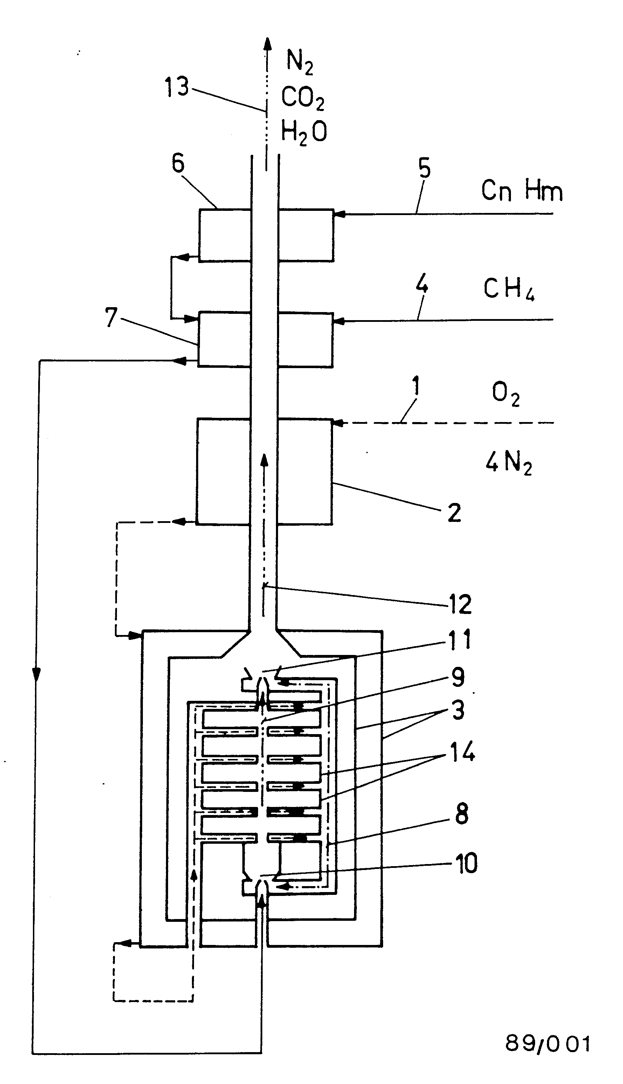

**Ansprüche**

1. Verfahren zur selbsttätigen Temperatur- und Leistungsregulierung einer oder mehrerer, mit Kohlenwasserstoffen betriebenen Hochtemperatur-Brennstoffzellen (14) mit einem Feststoffelektrolyten auf der Basis von Zirkonoxyd, dadurch gekennzeichnet, dass die Brennstoffzellen (14) auf der einen Seite mit gasförmigem (4) oder flüssigem (5), nachträglich verdampftem Brennstoff und auf der anderen Seite mit einem gasförmigen Sauerstoffträger (1) beaufschlagt werden, und dass das den Restsauerstoff und gegebenenfalls ein Ballastgas enthaltende, von der Sauerstoffseite der Brennstoffzellen (14) abströmende Gas (8) in zwei Ströme geteilt wird, wobei der erste Strom zur Vorverbrennung einem, in Strömungsrichtung des Brennstoffs gesehen, vor den Brennstoffzellen (14) angeordneten Brenner (10), der zweite Strom zur Nachverbrennung einem, in Strömungsrichtung des Abgases gesehen, nach den Brennstoffzellen (14) angeordneten Brenner (11) zugeführt wird, wobei die Vor- wie die Nachverbrennung durch künstliche Mittel eingeleitet und aufrechterhalten wird, und dass der erste Strom so bemessen wird, dass seine Sauerstoffmenge zur vollständigen Verbrennung des Brennstoffs nicht ausreicht, während der zweite Strom so bemessen wird, dass stets ein über die vollständige Verbrennung des Restbrennstoffs hinausgehender Sauerstoffüberschuss vorhanden ist.

2. Verfahren nach Anspruch 1, dadurch gekennzeichnet, dass das Mengenverhältnis der den Restsauerstoff enthaltenden, zur Vorverbrennung und zur Nachverbrennung dienenden Ströme des Gases (8) fest eingestellt wird.

3. Verfahren nach Anspruch 1, dadurch gekennzeichnet, dass das Mengenverhältnis der den Restsauerstoff enthaltenden, zur Vorverbrennung und zur Nachverbrennung dienenden Stroms des Gases (8) über entsprechende Regeleinrichtungen den Betriebsbedingungen angepasst wird.

89/0 01

| | **EINSCHLÄGIGE DOKUMENTE** | | EP 89123123.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>GB - A - 1 309 517</u> (BBC) * Fig. 1,2; Anspruch 1 * -- | 1 | H 01 M 8/04 H 01 M 8/12 G 05 D 29/00 |
| A | <u>EP - A1 - 0 055 011</u> (WESTINGHOUSE) * Zusammenfassung; Fig. 4 * ---- | 1 | |
| | | | **RECHERCHIERTE SACHGEBIETE (Int Cl⁵)** |
| | | | H 01 M G 05 D |

Der vorliegende Recherchenbericht wurde für alle Patentansprüche erstellt.

| Recherchenort | Abschlußdatum der Recherche | Prüfer |
|---|---|---|
| WIEN | 07-03-1990 | LUX |

EPA Form 1503 03 82